# EUROPÄISCHE PATENTANMELDUNG

(11) **EP 4 345 727 A1**
(43) Veröffentlichungstag der Anmeldung: **03.04.2024**
(21) Anmeldenummer: 22198226.7
(22) Anmeldetag: 28.09.2022
(51) Int. Cl.: G06Q 30/0601, G06F 3/01

(54) **MUSTERSTÜCK FÜR EINE PERSONENTRANSPORTANLAGE**

(71) Anmelder: INVENTIO AG, 6052 Hergiswil (CH)
(72) Erfinder: Carrara, Elena, 6005 Luzern (CH)
(74) Vertreter: Inventio AG

(57) **Zusammenfassung**

Die Erfindung betrifft ein Musterstück (100), welches zumindest einen Teilbereich einer Personentransportanlage, welche in einer aus einer Vielzahl möglicher Konfigurationen ausgewählten Konfiguration konfiguriert ist, in visueller und/oder haptischer Weise erfahrbar wiedergibt, wobei das Musterstück (100) einen maschinenlesbaren Code (110) umfasst, welcher bei einer maschinellen Verarbeitung des Codes (110) zur Bereitstellung von Daten führt, welche die gewählte Konfiguration repräsentieren.

## Beschreibung

Die vorliegende Erfindung betrifft ein Musterstück, welches zumindest einen Teilbereich einer Personentransportanlage in visueller und/oder haptischer Weise erfahrbar wiedergibt. Ferner betrifft die Erfindung ein Arbeitsmittel, welches das Musterstück und einen Konfigurator umfasst, der eine anhand des Musterstücks gewählte Konfiguration der Personentransportanlage darstellt. Weiterhin betritt die Erfindung ein Verfahren zum Gestalten einer Personentransportanlage.

Eine Personentransportanlage wie bspw. eine Aufzugsanlage befördert Personen und/oder Lasten in einer beweglichen Kabine in vertikaler oder schräger Richtung. Unter den Begriff einer Personentransportanlage wie er hierin verstanden wird sollen aber auch bspw. Fahrtreppen, Rolltreppen und dgl. Personenbeförderungsmittel fallen.

Ebenso sollen unter einer Aufzugskabine nicht nur vollständig geschlossene oder umbaute Kabinen verstanden werden, sondern auch solche Kabinen Fahrkörbe, Zellen, Abteile, Fahrgasträume, etc. die bspw. nur teilweise umbaut sind, also bspw. zu einer oder mehreren Seiten hin offen konstruiert sind.

Eine Aufzugkabine kann ein umfangreiches Interieur aufweisen, das bspw. Verkleidungen für Seiten- und Rückwand umfasst, wobei an den Wänden ein Handlauf oder mehrere Handläufe vorgesehen sein können, eine Gestaltung der Innentüren, des Bodens und der Decke, und wobei die weitere Gestaltung noch Beleuchtungsanlagen, Markierungen, Schilder, Bedienelemente usw. umfasst.

Für jeden einzelnen der genannten Aspekte gibt es eine Vielzahl von Gestaltungsmöglichkeiten was die verwendeten Materialien, eine Oberflächengestaltung, ein Finish, usw. angeht. Dazu sind auch einer Formgebung bspw. von Handlauf, Beleuchtung, Beschilderung etc. kaum Grenzen gesetzt. Oft wird versucht, eine vollständige Innenraumgestaltung gemäß der Zweckbestimmung, z.B. 'Hotel', 'Büro', einer bestimmten Stilrichtung, z.B. mit einer vorherrschenden Farbgebung, eines Komfortlevels, z.B. 'gehoben', 'luxuriös', etc. auszurichten, und entsprechende vordefinierte Gesamtgestaltungen oder Konfigurationen werden vom Aufzughersteller dem Kunden angeboten. Abgesehen davon, dass es sehr viele solcher vordefinierten Gestaltungen geben kann, müssen auch bei einer vordefinierten Konfiguration weiterhin Möglichkeiten bestehen, einzelne Komponenten nach Kundenwunsch zu ändern, d.h. die Zahl der Kombinationen und resultierender Konfigurationen ist in der Praxis schwer zu überschauen.

Es ist bekannt, Muster, Proben oder Musterstücke bspw. von Wandverkleidungen, Bodenplatten oder -belägen usw. bereitzuhalten, die dem Kunden eine visuelle und/oder haptische Unterstützung bei der Konfigurationsauswahl bieten. Bspw. kann in einem Musterkoffer ein umfangreicher Satz von Musterstücken untergebracht sein. Aus Kombinationen ausgewählter Musterstücke für Wand, Boden, etc. kann dann ein Eindruck entstehen.

Bspw. können jeweils ein Musterstück für Boden und Wand bzw. zwei Wände zusammengestellt werden, und zwar als Modell einer verkleinerten Kabine, um so einen Eindruck zu erhalten. Zwar können dann bspw. Farbgebung, Haptik, etc. für diese Teilaspekte der Kabine stimmen, allerdings benötigt der Kunde weiterhin sehr viel Vorstellungskraft, so wie man aufgefordert wird, von einer Puppenstube auf eine Stube in Originalgröße zu schließen, wobei dem Modell der Kabine alle weiteren Details wie bspw. Beleuchtung, Markierungen usw. fehlen.

Es besteht daher ein Bedarf an verbesserter technischer Unterstützung, um Kunden wie dem Betreiber einer Personentransportanlage eine optimale Vorstellung von möglichen Gestaltungen einer Aufzugkabine zu verschaffen. Auch besteht ein Bedarf daran, eine solche Unterstützung auch bei einer Vielfalt möglicher Konfigurationen einfach zu gestalten, so dass der Einsatz der technischen Unterstützung bspw. auf einer Messe, bei einem Kundenbesuch usw. praktikabel ist. Es besteht insbesondere auch ein Bedarf daran, einen einfachen, schnellen und praktikablen Wechsel zwischen verschiedenen Konfigurationen zu ermöglichen, so dass bspw. Ideen und Wünsche des Kunden zügig veranschaulicht werden können. Weiterhin besteht ein Bedarf daran, dass eine solche technische Unterstützung mit geringem zusätzlichem Platzbedarf einhergeht und bspw. in einem Musterkoffer untergebracht werden kann.

Die vorgenannten Bedarfe werden durch den Gegenstand der Erfindung gemäß den beigefügten unabhängigen Ansprüchen erfüllt. Vorteilhafte Ausführungsformen sind in den abhängigen Ansprüchen und der nachfolgenden Beschreibung angegeben.

Gemäß einem ersten Aspekt der Erfindung wird ein Musterstück vorgeschlagen, welches zumindest einen Teilbereich einer Personentransportanlage in visueller und/oder haptischer Weise erfahrbar wiedergibt, wobei das Muster den Teilbereich bspw. einer Aufzugkabine in einer aus einer Vielzahl möglicher Konfigurationen ausgewählten Konfiguration konfiguriert. Das Musterstück umfasst einen maschinenlesbaren Code, welcher bei einer maschinellen Verarbeitung des Codes zur Bereitstellung von Daten führt, welche die gewählte Konfiguration repräsentieren.

Die Personentransportanlage kann bspw. eine Aufzugsanlage betreffen, wie insbesondere eine Aufzugkabine eines Aufzugs betreffen. Der Teilbereich einer Aufzugkabine kann bspw. einen Boden, eine Wand oder mehrere Wände, bspw. Seitenwände, usw. betreffen. Genauer gesagt kann ein Musterstück bspw. ein Muster einer Boden- oder Deckenplatte, eines Wandpaneels oder einer Wandverkleidung, eines Handlaufs, einer Beleuchtungsanlage, einer Markierung, eines Schildes, etc. (oder Kombinationen daraus) umfassen.

Prinzipiell kann die Personentransportanlage aber bspw. auch eine Fahr- oder Rolltreppe betreffen, wobei der zu konfigurierende Teilbereich die Fahrstufen, eine Verkleidung der Seitenbereiche, mindestens einen Handlauf, einen Zu- oder Abgangsbereich, oder Kombinationen hieraus betreffen kann.

Das Musterstück kann bspw. in rechteckiger oder quadratischer Form vorliegen und kann ein Materialmuster umfassen, ein Farbmuster, ein Muster eines Farbverlaufs, einer Marmorierung, etc. Das Muster kann zusätzlich oder alternativ eine textile Struktur, eine Textur einer beliebigen Materialart, eine Haptik, etc. betreffen. Das Musterstück kann auch bspw. ein Muster eines Handlaufs betreffen, etwa ein Teilstück davon, oder kann ein Muster oder ein Probenstück einer Beleuchtung, eines Spiegels, einer Kantengestaltung, einer Gravur, etc. einer Anzeigetafel, eines Bedienelements, etc. betreffen.

Der maschinenlesbare Code kann bspw. aktiv ausgesendet oder abgestrahlt werden, bspw. per Bluetooth oder einem anderen Funksignal mit kurzer Reichweite, bspw. in Form von Beacons. Bevorzugt ist der maschinenlesbare Code passiv verfügbar, d.h. muss aktiv angefordert werden, und kann bspw. in Reaktion auf eine drahtlos von einem Sender übermittelte Anforderung abgestrahlt werden; bspw. kann der Code von einem RFID ("Radio Frequency IDentification") -Tag abgestrahlt werden. Der Code kann abtastbar vorliegen, bspw. in Form eines optischen (oder infraroten) Labels, etwa als eindimensionaler Barcode oder Strichcode, zweidimensionaler Barcode, z.B. QR("Quick-Response")-Code, etc. Ein solcher Code kann etwa von einem kostengünstigen optischen Lesegerät, etwa einem optischen Scanner gescannt oder abgelesen werden. Eine solche Scanvorrichtung wird bspw. durch eine Kamera eines Smartphones (oder eines vergleichbaren mobilen Geräts) mit entsprechender Firmware / Software verwirklicht.

Der Code kann beispielsweise als Etikett vorliegen, oder als ein Tab oder Reiter vergleichbar zu einem Karteireiter, oder als Streifen, Schlaufe, An- oder Aufhänger, usw. und kann aus verschiedenen Materialien bestehen einschließlich Papier, Pappe, Kunststoff, sowie Kombinationen daraus. Der Code kann an dem Musterstück befestigt sein, bspw. mittels Klemmen, Klammern, Kleben, Nieten, Schrauben, oder Kombinationen hieraus. Der Code kann auch als eine Markierung auf das Musterstück aufgebracht sein, bspw. als farbliche Markierung, Gravur, Ritzung und/oder Prägung, etc.

Die Bereitstellung von Daten betrifft eine Repräsentation der ausgewählten Konfiguration, wobei die Repräsentation zumindest eine visuelle Darstellung betrifft, optional aber auch die Bereitstellung weiterer Daten, die bspw. das Material des Musterstücks, also etwa Spezifikationen zu Herkunft, Zusammensetzung und/oder Verarbeitung usw. betreffen können.

Die Repräsentation umfasst einen oder mehrere Aspekte der Konfiguration wie etwa eine bestimmte jeweilige Zurichtung von Wand, Boden, Decke, Handlauf, Beleuchtung, usw. Bspw. kann eine minimale Repräsentation eine Wand- und Bodengestaltung einer Konfiguration betreffen, und zwar bspw. in Bezug auf Farbe und Textur, so dass etwa die visuelle Repräsentation am ehesten einer Zusammenstellung jeweils eines Musterstücks für die Wand und für den Boden entspricht. Hiervon ausgehend kann die Repräsentation dann weitere Gestaltungsmerkmale umfassen, bspw. für Decke, Beleuchtung, etc.

Gemäß einem weiteren Aspekt der Erfindung wird ein Arbeitsmittel vorgeschlagen, dass mindestens ein Musterstück umfasst, wie es hier skizziert ist, sowie einen Konfigurator, der dazu ausgebildet ist, den maschinenlesbaren Code einzulesen sowie eine darauf basierende maschinelle Verarbeitung durchzuführen, um entsprechend dem eingelesenen Code die gewählte Konfiguration der Personentransportanlage darzustellen.

Der Konfigurator kann dazu ausgebildet sein, eine Vielzahl von Konfigurationsmöglichkeiten des Personentransportmittels darzustellen, und kann Navigationsmöglichkeiten anbieten, um bestimmte Konfigurationen zusammenzustellen, zwischen verschiedenen Konfigurationen zu wechseln, Daten zu einer bestimmten Konfiguration auszugeben, bspw. an einen Drucker, eine Datenbank zur weiteren Verarbeitung, etc. Der Konfigurator kann dazu etwa Menüs, Buttons, Regler, und dgl. Steuerinstrumente aufweisen, wie sie als solches etwa von graphischen Benutzeroberflächen, Konfigurationstools etwa für Entwicklerstudios, in Architektur umgebungen, für technisches Zeichnen, etc. bekannt sind.

Der Konfigurator kann die Vielzahl von Konfigurationen untereinander komplex vernetzen, wobei eine solche Vernetzung zusätzlich oder alternativ auch in einer Konfigurationsdatenbank repräsentiert sein kann, mit welcher der Konfigurator permanent oder zeitweise in Verbindung stehen kann. Der Konfigurator kann anbieten, konkrete Farben, Texturen, etc. für jede Komponente einer Innenausstattung eines Aufzugs auszuwählen, zu verändern, zurückzusetzen, etc. Andererseits kann der Konfigurator eine teilweise Gestaltung vordefinieren, die konkrete Ausprägungen einer Mehrzahl von Konfigurationsmerkmalen umfasst, so dass diese gemeinsam vorausgewählt sind, und kann Gruppen solcher vordefinierter Konfigurationen anbieten, bspw. sortiert nach Themen, Shapes, Styles, Grundfarben, einem gemeinsamen Finish, etc.

Das Arbeitsmittel kann ein Set von Musterstücken umfassen. In einer bevorzugten Ausführungsform umfasst der Konfigurator dann alle mit den Musterstücken möglichen Konfigurationen, oder mehr. Der Konfigurator kann bspw. mehr, bspw. seltener gewünschte, Farben, Zwischentöne, Texturen, etc. bereitstellen als durch den Satz von Musterstücken repräsentiert.

Der maschinenlesbare Code kann bspw. von einem Scanner gescannt werden, der abgesetzt vom oder integriert mit dem Konfigurator vorliegt. Das Scannen umfasst das Erkennen der im Code codierten bzw. vom Code repräsentierten Daten. Das Einlesen der Daten und deren maschinelle Verarbeitung im Konfigurator kann eine Aufbereitung der Daten für eine Präsentation der gewählten Konfiguration umfassen, bspw. auf einem Bildschirm. Die Präsentation kann bspw. eine Darstellung einer virtuellen Aufzugkabine umfassen, die gemäß im Konfigurator aktuell angewählten und/oder vorausgewählten Konfigurationsmöglichkeiten gestaltet ist. Vorzugsweise sollten Präsentationen durch den Konfigurator eine Fahrzeugkabine möglichst vollständig darstellen, d.h. ausgewählte oder auswählbare Aspekte wie Wände, z.B. Seitenwände, Rückwand, Boden, Decke, Handlauf, Innentür, Beleuchtung, Bedienelemente etc. sollten zumindest angedeutet sein.

Der Konfigurator kann so ausgebildet sein, dass ein Scannen oder Ablesen des Codes, bzw. das Einlesen der erkannten Daten eine vordefinierte Konfiguration aufruft bzw. zur Darstellung bringt. Ist der Code bspw. mit einem Musterstück einer Wandverkleidung assoziiert bzw. an diesem befestigt, dann präsentiert der Konfigurator eine virtuelle Aufzugkabine, die mit einer dem Musterstück entsprechenden Wandverkleidung ausgestattet ist.

Die von dem Konfigurator konkret angezeigte Konfiguration kann vom Zustand des Konfigurators zum Zeitpunkt des Einlesens der Daten abhängig sein. Ist bspw. der Konfigurator momentan nicht aktiv oder zeigt keine Konfiguration an, kann das Einlesen der codierten Daten die Anzeige einer virtuellen Fahrzeugkabine bewirken, die gemäß den Eigenschaften des Musterstücks konfiguriert ist, wobei alle weiteren Gestaltungsmöglichkeiten gemäß einem vordefinierten Grund- oder Basismodell gewählt sind. Ein solches Basismodell kann bspw. alle momentan nicht ausgewählten Optionen gegenüber den ausgewählten Optionen zurückgenommen darstellen, bspw. durch angedeutete Konturlinien, teilweise durchsichtig, in einer neutralen Farbe, etwa Weiß, ohne oder mit einer speziellen Textur, usw. Als Grundmodell zur Ergänzung des eingelesenen Codes des Musterstücks kann aber auch eine Referenzmodell dienen welches für einen bestimmten Stil steht. Bspw. kann ein kundenspezifisches Referenz- bzw. Grundmodell aus einer Datenbank abgerufen werden, bspw. einem Kundenprofil.

Ist der Konfigurator zum Zeitpunkt des Scannens bereits aktiv und zeigt eine bestimmte Konfiguration, kann das Einlesen des Codes und dessen maschinelle Verarbeitung bewirken, dass die aktuell dargestellte Konfiguration geändert wird, bspw. so dass die Eigenschaften des mit dem Code assoziierten Musterstücks repräsentiert werden. Ggf. können auch weitere Aspekte der Konfiguration geändert werden, etwa um den Anforderungen an einen vordefinierten Stil zu genügen, wenn im Konfigurator oder einer unterliegenden Datenbank derartige Zusammenhänge definiert sind.

Wird eine Konfiguration aktuell dargestellt, bei der eine oder mehrere Optionen noch nicht an- oder ausgewählt, d.h. durch eine konkrete Auswahl eingestellt sind, kann das Scannen eines Codes bewirken, dass die Eigenschaften des entsprechenden Musterstücks ausgewählt werden. Auf diese Weise kann etwa ein weitgehend leeres Grundmodell nach und nach mit gewünschten Ausstattungsmerkmalen versehen werden, wobei eine Auswahl durch das Einscannen der Codes der entsprechenden Musterstücke, durch Auswahl von Optionen am Konfigurator, oder Kombinationen daraus mit größtmöglicher Flexibilität erfolgen kann. Hierbei können etwa bereits vorgenommene Auswahlvorgänge, etwa (nur) solche die per Einscannen vorgenommen wurden, dokumentiert werden, indem die entsprechenden Optionen, Buttons, etc. am Konfigurator ausgeblendet oder ausgegraut werden. Nur die noch eingeblendeten Optionen sind dann noch auszuwählen.

Wie bereits gesagt kann das Arbeitsmittel eine Vielzahl von Musterstücken umfassen, bspw. ein Set oder ein Satz von Mustern, oder auch mehrere Sätze von Mustern. Bspw. kann ein Satz für Zurichtungen der Wand bzw. Wandverkleidungen vorgesehen sein, ein weiterer Satz für Boden, Bodenplatten, oder Bodenbeläge, usw. Ein Unter- oder Teilsatz des Mustersatzes für die Wand kann für Farben, ein weiterer Teilsatz für unterschiedliche Texturen bereitgehalten sein. Der Satz für den Boden kann einen Teilsatz für Bodenplatten aus Marmor, einen anderen Teilsatz für Bodenplatten oder -beläge aus Linoleum vorgesehen sein, etc. Alle Musterstücke umfassen haben dabei jeweils einen Code, wobei der Code für jedes Musterstück in dem Set oder Satz eindeutig sein kann, so dass der Konfigurator unmittelbar zu einer Konfiguration springen kann, die das identifizierte Material bzw. Muster enthält.

Allerdings ist es auch denkbar, dass der Code, oder ein Teil davon, bspw. eine Klasse von Materialien, Farben, Zurichtungen identifiziert, und der Konfigurator in Reaktion auf das Erkennen eines solchen allgemeinen Codes bspw. ein entsprechendes Menü anzeigt oder hervorhebt, wobei die weitere Auswahl dann am Konfigurator vorzunehmen ist. Auf diese Weise kann berücksichtigt werden, dass ein Satz Musterstücke in einem Musterkoffer gegebener Größe nicht sämtliche Konfigurationen abdecken kann, während die von einem Konfigurator bereitgestellten Optionen sehr leicht erweiterbar sind.

Der Konfigurator kann auf einem Datenverarbeitungsgerät, bspw. einem Mobilgerät, einem Portable, Wearable, etc. installiert sein, bspw. in Form einer Anwendung, App, eines oder mehrerer Softwareprogramme, etc. Bei dem Gerät kann es sich konkret um ein Smartphone oder ein Tablet handeln, oder um ein Notebook, oder einen PC. Der Konfigurator kann zusätzlich oder alternativ auch auf einem Server installiert sein, der auf eine dahinterliegende Datenbank zugreift, so dass der Konfigurator auf dem Mobilgerät einen Client oder ein Frontend für die Server- bzw. Datenbankapplikation darstellt. Der Konfigurator kann auch auf einem Steuergerät installiert sein, bspw. einem AV (Audio/Video) -Server, der etwa in einer Messehalle, einem Besprechungsraum, etc. einen zentralen Bildschirm ansteuert.

Der Konfigurator kann zu einer 3D(dreidimensionalen)-Darstellung der gewählten Konfiguration der Personentransportanlage ausgebildet sein. Beispielsweise kann das Einlesen des Codes dazu führen, dass automatisch eine dreidimensionale Darstellung generiert wird, wenn eine VR ("Virtual Reality") -Brille, ein VR-Headset etc. detektiert wird, und die 3D-Darstellung wird dann an diese VR-Brille ausgegeben.

Das Arbeitsmittel kann mindestens einen Koffer, mindestens eine Tasche, oder Kombinationen davon umfassen, in dem bzw. in denen das Set von Musterstücken sowie das mobile Datenverarbeitungsgerät mit dem Konfigurator und optional das VR-Headset untergebracht sind. Koffer bzw. Tasche können bspw. von Vertriebspersonal etwa auf einer Messe oder bei einem Kundenbesuch mitgeführt werden.

Gemäß einem dritten Aspekt der Erfindung wird ein Verfahren zum Gestalten einer Personentransportanlage, insbesondere einer Aufzugskabine der Personentransportanlage, angegeben. Bei dem Verfahren wird ein maschinenlesbarer Code eines Musterstücks, das zuvor beschrieben worden ist, eingelesen wird, und eine dem eingelesenen Code entsprechenden Konfiguration der Personentransportanlage durch ein Datenverarbeitungsgerät dargestellt oder visualisiert werden.

Vorteilhafterweise wird das Datenverarbeitungsgerät als ein mobiles Datenverarbeitungsgerät vorgesehen, auf dem ein zuvor erwähnter Konfigurator in Form einer App installiert wird. Alternativ kann das Datenverarbeitungsgerät ebenfalls als eine zuvor erwähnte VR-Brille vorgesehen werden.

Nachfolgend werden spezielle Ausführungsbeispiele der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein erfindungsgemäßes Ausführungsbeispiel eines Musterstücks.
Fig. 2A zeigt ein erstes erfindungsgemäßes Ausführungsbeispiel eines Arbeitsmittels.
Fig. 2B zeigt ein zweites erfindungsgemäßes Ausführungsbeispiel eines Arbeitsmittels.
Fig. 3A veranschaulicht einen ersten erfindungsgemäßen Ablauf einer Konfigurationsauswahl für eine Aufzugkabine.
Fig. 3B veranschaulicht einen zweiten erfindungsgemäßen Ablauf einer Konfigurationsauswahl für eine Aufzugkabine.
Fig. 4 veranschaulicht einen dritten erfindungsgemäßen Ablauf einer Konfigurationsauswahl für eine Aufzugkabine.

Die Figuren sind schematische Darstellungen und sind nicht maßstabsgetreu. Bezugszeichen in den Ansprüchen sind nicht als Einschränkung anzusehen.

Begriffe wie "aufweisend", "umfassend", etc. schließen nicht das Vorhandensein weiterer Elemente oder Schritte aus. Begriffe wie "eine" oder "ein" schließen keine Vielzahl aus.

Es wird daraufhingewiesen, dass Merkmale oder Schritte, die in Bezug auf Ausführungsformen oder -beispiele beschrieben werden, auch in Kombination mit anderen Merkmalen oder Schritten anderer oben beschriebener Ausführungsbeispiele verwendet werden können. Schritte, die als aufeinanderfolgend beschrieben werden, können auch in anderer Reihenfolge und/oder parallel ausgeführt werden, sofern nicht ausdrücklich die geschilderte Reihenfolge als notwendig angegeben ist.

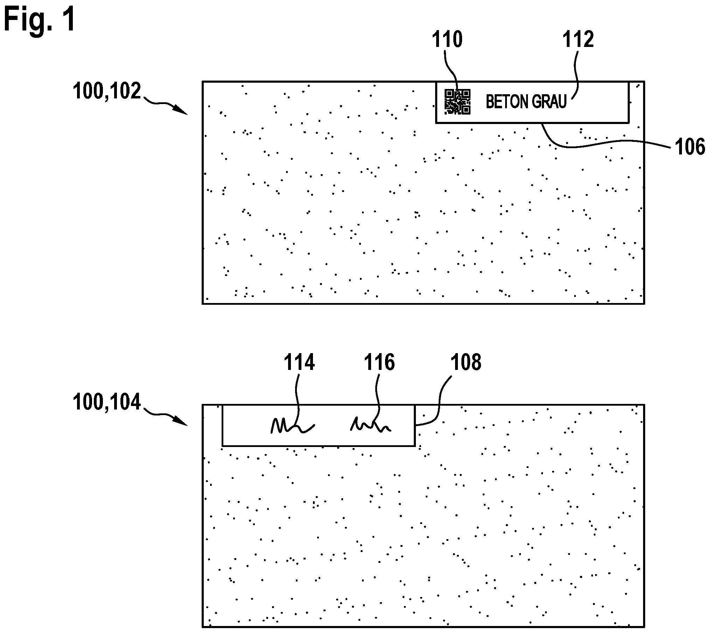

Fig. 1 zeigt in schematischer Form ein Ausführungsbeispiel eines Musterstücks 100 in einer Frontansicht (Vorderseite) 102 und einer Rückansicht (Rückseite) 104. Das Musterstück 100 umfasst eine Materialprobe bspw. für eine Wandverkleidung oder einen Boden einer Aufzugkabine. Die Materialprobe hat Abmessungen von bspw. 140 mm x 70 mm (Länge x Breite). Das Material der Probe hat ein Finish bzw. weist eine Zurichtung auf, die einer tatsächlichen Ausgestaltung in einer realen Kabine möglichst nahekommt.

Das Musterstück 100 ist auf der Vorderseite 102 sowie der Rückseite 104 jeweils mit einer Beschriftung bzw. einem aufgeklebten Frontlabel 106 sowie einem rückwärtigen Label 108 versehen. Bei der gezeigten Ausführung wird ein einziges Label über eine Kante des Musterstücks 100 hinweg auf dessen Vorderseite 102 und Rückseite 140 angebracht, so dass die Anbringung des bzw. der Labels erleichtert wird.

Das Frontlabel 106 weist einen QR-Code 110 auf, der für das Musterstück 100 spezifisch ist, d.h. der QR-Code 110 identifiziert eindeutig Material, Finish, usw. des Musterstücks 100 in einem Set unterschiedlicher Musterstücke. Der QR-Code 110 kann durch ein handelsübliches Scangerät gelesen werden, wie es bspw. in vielen Smartphones vorgesehen ist.

Das Label 106 umfasst weiterhin eine Beschriftung 112, die das Material des Musterstücks 100 in für Menschen lesbarer Schrift angibt. In dem gezeigten Beispiel sind Material und Farbe gemäß einer vorgegebenen Nomenklatur angegeben, d.h. "Concrete, Light Grey" ("Beton, Helles Grau").

Das rückwärtige Label 108 umfasst einen Hinweis 114 auf die Aufzugtypen, bei denen das Material 112 zum Einsatz kommen kann, und einen Materialcode 116, der dem QR-Code 110 ganz oder teilweise entsprechen kann, aber in für Menschen lesbarer Form.

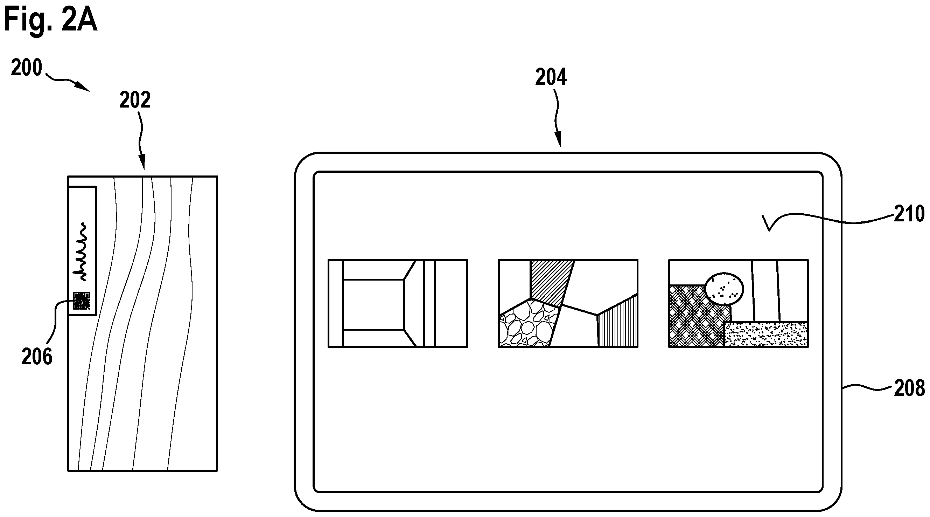

Fig. 2A zeigt ein erfindungsgemäßes Ausführungsbeispiel eines Arbeitsmittels 200, welches ein Musterstück 202 und einen Konfigurator 204 umfasst. Das Arbeitsmittel 200 kann bspw. in der Kundenberatung eines Aufzugherstellers zum Einsatz kommen, bspw. auf einer Messe oder einem Kundenbesuch. wenn es um die Innenraumgestaltung von Aufzugkabinen geht.

Für das Musterstück 202 gilt die Beschreibung des Musterstücks 100 aus Fig. 1 entsprechend. Insbesondere ist das Musterstück 202 wieder mit einem QR-Code 206 versehen.

Der Konfigurator 204 ist als App implementiert, die auf einem Tablet 208 installiert ist. Der Konfigurator 204 verfügt über eine Schnittstelle zum Einlesen der Daten, die in dem QR-Code 206 codiert sind. Ein Einlesen kann über eine im Tablet 208 eingebaute Kamera mit Scanfunktion erfolgen, vorzugsweise kann aber Vertriebspersonal ein Smartphone (nicht gezeigt) verwenden, um den Code 206 einzuscannen und die codierten Daten zu erkennen, die dann bspw. über Bluetooth, WLAN, etc. oder auch per Kabel vom Smartphone an das Tablet 208 übertragen und an den Konfigurator 204 übergeben werden. Die hier anhand eines Smartphones beschriebenen Funktionen sind generisch verfügbar und es wird deshalb im Allgemeinen nicht notwendig sein, dem Arbeitsmittel 200 nur für den Zweck des Einscannens ein Smartphone oder einen Scanner hinzuzufügen.

Der Konfigurator 204 verfügt über eine Benutzeroberfläche 210, die es ermöglicht, verschiedenste Konfigurationen einer Aufzugkabine zusammenzustellen, visuell anzuzeigen, zwischen verschiedenen Konfigurationen zu wechseln, etc., um auf diese Weise eine Kundenberatung zu unterstützen. Details hierzu werden weiter unten diskutiert.

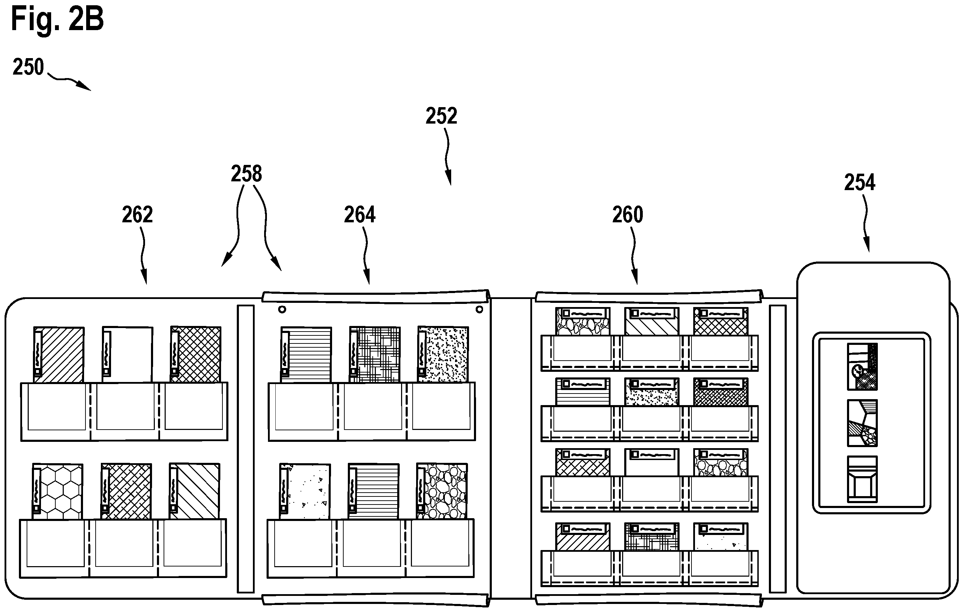

Zunächst wird anhand von Fig. 2B ein weiteres Ausführungsbeispiel eines Arbeitsmittels 250 beschrieben, welches ein Set oder einen Satz 252 mit einer Vielzahl von Musterstücken 253 umfasst, sowie einen Konfigurator 254, die sämtlich in eine Tasche 256 aufgenommen sind.

Für jedes einzelne Musterstück 253 in dem Satz 252 von Musterstücken gilt die Beschreibung des Musterstücks 100 aus Fig. 1. Der Satz 252 kann Teilsätze enthalten, bspw. einen Teilsatz 258 mit Musterstücken für Wandverkleidungen von Aufzugkabinen, und einen Teilsatz 260 mit Musterstücken möglicher Bodenplatten oder Bodenbeläge. Weitere Teilsätze können bspw. einen Teilsatz 262 mit unterschiedlichen Farben für die Wände, einen Teilsatz 264 für unterschiedliche Zurichtungen der Wände umfassen, etc.

Anhand der Teilsätze 258 und 260 ist beispielhaft gezeigt, dass das Arbeitsmittel 250 über Musterstücke mit unterschiedlichen Abmessungen verfügen kann. Es ist auch klar, dass das Arbeitsmittel 250 weitere Musterstücke enthalten kann, die in Fig. 2B nicht gezeigt sind, bspw. Musterstücke für Handläufe, Beschilderungen, Spiegel, etc. Zur Aufnahme einer Vielzahl von Musterstücken könnte das Arbeitsmittel auch mehr als nur eine Tasche 256 enthalten.

Alle Musterstücke des Arbeitsmittels sind mit einem QR-Code versehen. Jeder QR-Code kennzeichnet das entsprechende Musterstück in dem Set eindeutig. Es ist denkbar, dass ein Aufzughersteller ein umfangreiches Gesamtset von verschiedenen Musterstücken hat, von dem jeweils nur ein Teil in einen Koffer aufgenommen werden kann, bspw. je nach bekannten Kundenvorlieben, etc. Dann ist es vorteilhaft, wenn sämtliche Musterstücke untereinander eindeutig gekennzeichnet sind, damit bei einer aktuellen Zusammenstellung keine Rücksicht auf eventuell gedoppelte Kennungen genommen werden muss.

Für den Konfigurator 254 gilt die Beschreibung des Konfigurators 204 aus Fig. 2A entsprechend.

Wie aus der Fig. 2B besonders deutlich wird, kann eine Beratung zu einer Aufzugkabinenausstattung bei einer Vielzahl möglicher Konfigurationen, Ausstattungsvarianten etc. durch eine entsprechende Vielzahl von Musterstücken unterstützt werden. So kann der Kunde durch Auswahl eines bestimmten Musterstücks aus dem Satz 258 für eine Wandverkleidung und eines Musterstücks aus dem Satz 260 für eine Bodengestaltung eine gewisse Vorstellung einer entsprechend konfigurierten Aufzugkabine erhalten. Allerdings muss er die vollständig ausgestattete Kabine weiterhin im Wesentlichen imaginieren, denn bei den Musterstücken handelt es sich nur um kleine Probestücke, die einen ersten Eindruck von Farbton und Haptik der Wand- bzw. Bodengestaltung vermitteln mögen, aber das Zusammenwirken aller Komponenten der vollständigen Innenausstattung einer Aufzugkabine schwerlich nachbilden können.

Weiterhin bezugnehmend auf das Beispiel der Fig. 2B wird daher erfindungsgemäß vorgeschlagen, das Arbeitsmittel 250, genauer gesagt das Set von Musterstücken 252, um den Konfigurator 254 zu ergänzen. In einem konkreten Ausführungsbeispiel liegt eine Datenbank mit einem Datensatz für jedes Musterstück aus dem Set 252 vor. Der Datensatz enthält zumindest eine visuelle Repräsentation eines Farbtons, ggf. mit Farbverlauf, Textur, etc. Weitere Inhalte können etwa die Daten sein, die in der Fig. 1 in Bezug auf das Musterstück 100 beschrieben wurden, aber auch technische Spezifikationen des Materials, usw.

In einer Sichtweise stellt der Konfigurator 254 dem Kundenberater ein Frontend für die erwähnte Datenbank zur Verfügung. Der Konfigurator 254 kann in permanenter Kommunikation mit der Datenbank stehen, bspw. per drahtloser Anbindung, es kann aber auch etwa eine lokale Kopie tagesaktuell heruntergeladen werden etc.

Der Konfigurator kann die in der Datenbank vorhandenen Datensätze bspw. in Form von anwählbaren Optionen für Wandverkleidungen, Bodenplatten, etc. anzeigen. Wie beschrieben, ist der Satz von Musterstücken 252 nach bestimmten Kriterien in Teilsätze 258, 260, 262 aufgeteilt, um ein Musterstück in der Vielzahl an Musterstücken leichter auffindbar zu machen. Der Konfigurator kann darüber hinaus viele weitere Möglichkeiten einer Vorstrukturierung der Vielzahl an Gestaltungs- bzw. Konfigurationsmöglichkeiten bieten. Bspw. kann der Konfigurator umfassende Gestaltungen einer Aufzugkabine als teilweise oder vollständig vordefinierte Konfigurationen enthalten, die unter einem bestimmten Stil etc. auffindbar und anwählbar sind. Auch Gruppen von vorgegebenen Konfigurationen können so definiert werden.

Eine bestimmte Konfiguration wird als eine visuelle Repräsentation einer Aufzugkabine angezeigt, wobei sämtliche Parameter für Seiten- und Rückwand, Boden, Decke, Innentüren, Beleuchtung, usw. durch eine konkrete Instanz eines Materials, einschließlich Textur, Lackierung, sonstiges Finish, etc. belegt sind. Neben vollständig vordefinierten Konfigurationen können auch nur teilweise konkret definierte Konfigurationen angezeigt werden, bspw. in Form einer Kabine, bei der alle (noch) nicht konkret ausgewählten Parameter oder Optionen in weißer Farbe, ganz oder teilweise durchsichtig, mit lediglich angedeuteten Konturlinien, etc. dargestellt werden. Der Konfigurator kann auch eine vollständig undefinierte Kabine bereitstellen, die dann im Beratungsprozess nach und nach konkretisiert wird. Der Konfigurator kann den Beratungsprozess auf vielfältige Weise unterstützen, und kann bspw. basierend auf einer entsprechend ausgestatteten Datenbank noch fehlende bzw. passende Gestaltungsmöglichkeiten, Optionen, Parametern etc. vorschlagen, wie vielfach hierin diskutiert.

Auf die beschriebene Weise werden physische und digitale Inhalte genutzt, um den Kunden dabei zu unterstützen, eine Vorstellung von den gewählten Konfigurationen zu erhalten. Gestaltungsmöglichkeiten sind sowohl physisch in Form von Musterstücken als auch digital im Konfigurator repräsentiert. Eine Vielzahl an Materialien ist unmittelbar visuell und haptisch erfahrbar, und gleichzeitig kann eine Materialauswahl im Rahmen einer vollständigen Ausstattung bildlich eingeschätzt werden.

In der Umsetzung stößt ein derartiger phygitaler Ansatz (phygital = Kombination aus physisch und digital) allerdings auf praktische Probleme. Insbesondere ist eine Vielzahl von Gestaltungsmöglichkeiten einerseits durch eine Vielzahl an Musterstücken repräsentiert, andererseits durch eine Vielzahl an Konfigurationsmöglichkeiten im Konfigurator. Wählt der Kunde ein bestimmtes Musterstück aus, steht der Kundenberater unmittelbar vor dem Problem, entsprechende Konfigurationen im Konfigurator aufzufinden. Der schnelle Zugriff auf geeignete Konfigurationen im Konfigurator, so dass der Kunde nicht warten muss, erfordert erhebliche Erfahrung des Beraters im Umgang mit dem Konfigurator, als auch Kenntnis über alle aktuell vorhandenen Konfigurationsmöglichkeiten. Der Berater muss sich permanent auf dem Laufenden halten, das ist aufwendig und teuer.

Um den oben geschilderten phygitalen Ansatz praktisch anwendbar zu machen, wird erfindungsgemäß vorgeschlagen, eine Verbindung zwischen den physischen Musterstücken und den digitalen Inhalten im Konfigurator zu definieren, nämlich jedem Musterstück einen Code zuzuweisen, der maschinell verarbeitet werden kann, so dass der Konfigurator automatisch zu einer geeigneten Konfiguration springt. Der Berater wird damit von der Aufgabe entlastet, den gesamten aktuellen Inhalt des Konfigurators im Kopf haben zu müssen, und kann sich auf andere Beratungsinhalte konzentrieren.

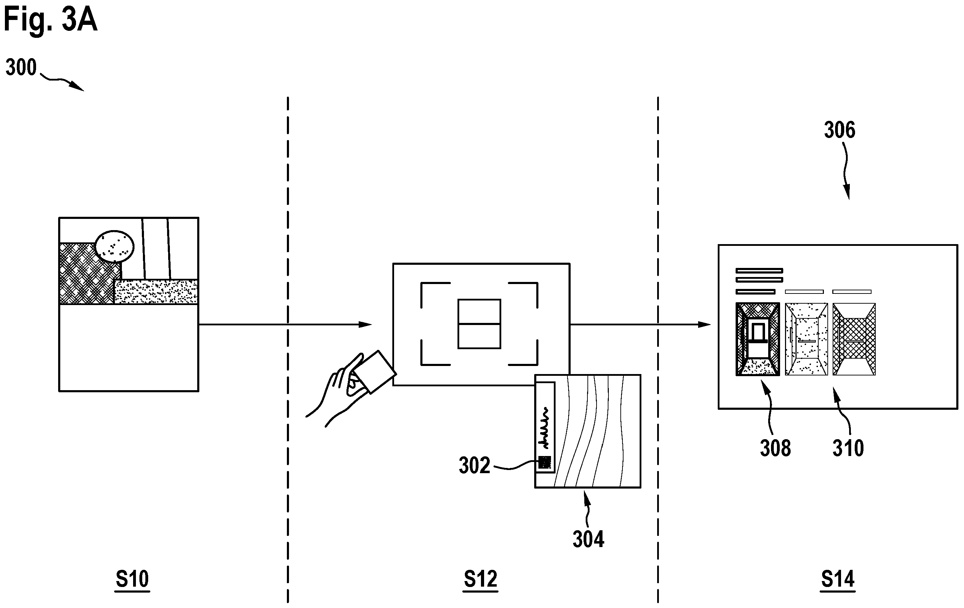

Fig. 3A veranschaulicht ein Beispiel für einen Ablauf 300 bei dem ein QR-Code 302 auf einem Musterstück 304 mit einem Konfigurator 306 vorteilhaft zusammenwirkt. In einem Schritt S10 wird einem Kunden für die Ausgestaltung einer Aufzugkabine bspw. das Set von Musterstücken 252 aus dem Musterkoffer 256 (Fig. 2B) präsentiert. Der Kunde wählt aus dem Set 252 das Musterstück 304 aus, bspw. weil das Material, der Farbton, die Maserung, ein haptischer Eindruck, etc. den Vorstellungen des Kunden entspricht.

In einem Schritt S12 scannt ein Betreuer (oder ein Kunde) bspw. mit einem Smartphone den QR-Code 302 des Musterstücks 304. Die dem QR-Code 302 entsprechenden Daten werden an den Konfigurator 306 übertragen, bei dem es sich bspw. um den Konfigurator 254 aus Fig. 2B handeln kann. Die übertragenen bzw. vom Konfigurator eingelesenen Daten identifizieren die durch das Musterstück 304 repräsentierte Ausstattungsvariante, also bspw. einer Wandverkleidung, in einer Datenbank (nicht gezeigt). Auf diese nimmt der Konfigurator 306 in einem Schritt S14 Zugriff, veranlasst durch den Empfang der Daten.

Konkret kann der Konfigurator 306 Konfigurationen identifizieren, bei denen die per Musterstück 304 gewählte Ausstattungsvariante beteiligt ist. Eine solche Konfiguration 308 kann beispielsweise bevorzugt angezeigt werden. Andere Konfigurationen 310, bei denen das nicht der Fall ist, können aus der Anzeige entfernt werden oder ausgegraut werden oder in anderer Weise von der bevorzugten Konfiguration 308 abgesetzt dargestellt werden.

Ausgehend von der in Reaktion auf das Scannen S12 automatisch aufgerufenen Konfiguration 308 kann die Beratung fortgesetzt werden. Bspw. können die ausgegrauten Konfigurationen 310 Varianten der Konfiguration 308 sein, bei denen bestimmte weitere Modifikationen vorgenommen wurden.

Bei einem bestimmten Ausführungsbeispiel kann der Konfigurator 306 durch das Einscannen bzw. dem Übertragen oder Einlesen der Daten des QR-Codes 302 gestartet oder aufgerufen werden, oder, falls bereits gestartet, kann der Konfigurator 306 zu einer vordefinierten Konfiguration 308 springen. Bspw. kann die Konfiguration 308 in der Datenbank als eine Konfiguration gekennzeichnet sein, die in Reaktion auf das Einscannen des Codes 302 bevorzugt aufgerufen wird, bspw. weil die Konfiguration 308 repräsentativ für einen bestimmten Ausstattungsstil steht, obwohl das Material des Musterstücks 304 auch in anderen Konfigurationen vorkommt.

Denkbar ist es auch, dass bestimmte aufzurufende Konfiguration aus einem Kundenprofil bestimmt wird, bspw. wenn der Konfigurator 306 den beratenen Kunden identifizieren kann (bspw. kann der Konfigurator feststellen, dass er sich an einem Kundenstandort befindet). Die aufgerufene Konfiguration 308 kann bspw. eine beim Kunden vorhandene Konfiguration sein, die anhand des QR-Codes 302 gemäß den Vorgaben des Musterstücks 304 modifiziert ist.

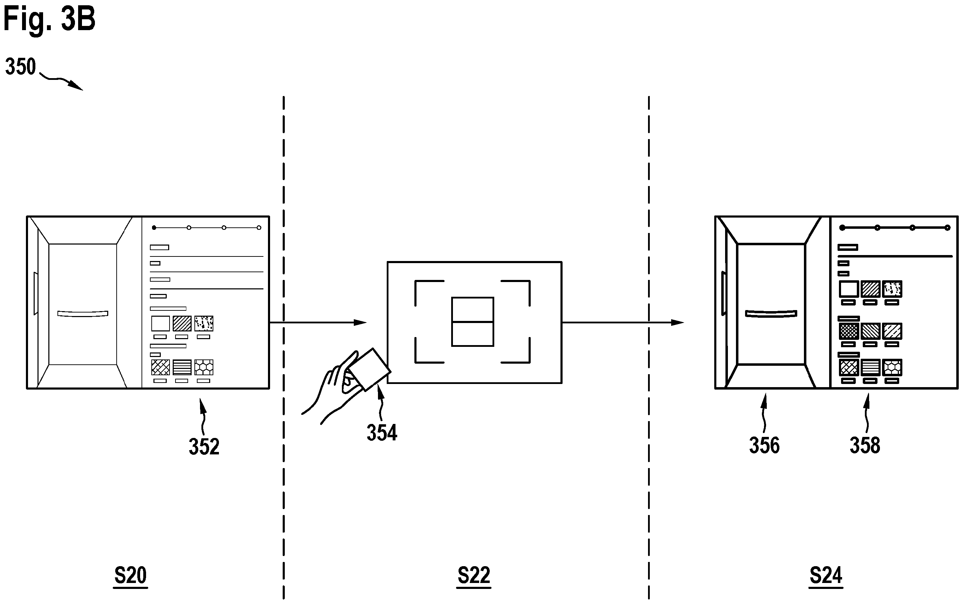

Mit anderen Worten, durch das Einscannen eines QR-Codes 302 von einem Musterstück 304 springt der Konfigurator 306 automatisch und komfortabel zu passenden Konfigurationen, und so entsteht ohne mühsames und langwieriges Aufsuchen ein praxistaugliches phygitales Erlebnis. Dieses setzt sich fort, wenn durch das Einscannen von QR-Codes anderer Musterstücke komfortabel weitere Varianten aufgesucht werden können, wie nachfolgend beispielhaft unter Bezugnahme auf Fig. 3B diskutiert wird.

Für die Schilderung des in Fig. 3B gezeigten Ablaufs 350 wird auf QR-Code 302 und Konfigurator 306 aus Fig. 3A Bezug genommen. In einem Schritt S20 zeigt der Konfigurator eine Konfiguration 352 an, für welche verschiedene Optionen entweder vordefiniert übernommen und/oder im Konfigurator ausgewählt wurden. Bei diesem Zustand des Konfigurators wird in einem Schritt S22 der QR-Code eines Musterstücks 354 eingescannt bzw. in den Konfigurator eingelesen. Der Konfigurator reagiert darauf in einem Schritt S24 mit der Anzeige einer geänderten Konfiguration 356, die mit der bisher dargestellten Konfiguration 352 bis auf Merkmale übereinstimmt, die gemäß den eingelesenen Daten geändert werden, bspw. kann sich eine Darstellung der Seitenwände gem. einem Material des Musterstücks 354 ändern.

Wie bereits angedeutet kann ein Beratungsprozess mit einer Konfiguration beginnen, bei der viele Eigenschaften noch gar nicht an- oder ausgewählt sind; bspw. könnte es sich um eine vordefinierte Konfiguration handeln, bei der nur wenige Merkmale oder Optionen vorbelegt sind, mit dem Ziel diese in einem Beratungsprozess Schritt für Schritt auszuwählen. Dies kann durch Anwählen der entsprechenden Menüs und Optionen im Konfigurator geschehen, und/oder durch Auswählen eines oder mehrerer Musterstücke und Einscannen der Codes der gewählten Musterstücke, wie in Fig. 3B veranschaulicht. Das Einscannen stellt einen zusätzlichen, sowohl intuitiven als auch schnellen und einfachen Weg dar, die Konfiguration 352 immer genauer auszugestalten und den Fortschritt im Konfigurator darzustellen. Das phygitale Erlebnis wird dadurch flüssiger und eingängiger.

Beide Verfahren des Einscannens und der Auswahl am Konfigurator können einander ergänzen und können im Wechsel durchgeführt werden; bspw. kann der Konfigurator automatisch Alternativen zu einem gewählten Material gem. Code anbieten. Bei einem Beispiel werden am Konfigurator alle oder einige Konfigurationen in den Menüs und Optionen 358 bevorzugt angezeigt, die mit dem zuletzt gewählten Material gem. eingescanntem Code möglich sind, so dass Kunde und/oder Berater auf einfache Weise diese Konfigurationen durchsehen können.

Bei weiteren Ausführungsbeispielen kann das Einscannen des QR-Codes bzw. das Einlesen der erkannten Daten in den Konfigurator und/oder eine andere Applikation zur Bereitstellung weiterer Daten führen, bspw. solcher Daten, die für den Kunden von Interesse sind, also bspw. Daten zur Herkunft, Herstellung, Nachhaltigkeit etc. des Materials. Andere Daten könnten für Mitarbeiter des Aufzugherstellers bereitgestellt werden, bspw. technische Spezifikationen, Zertifizierungen, etc. des Materials.

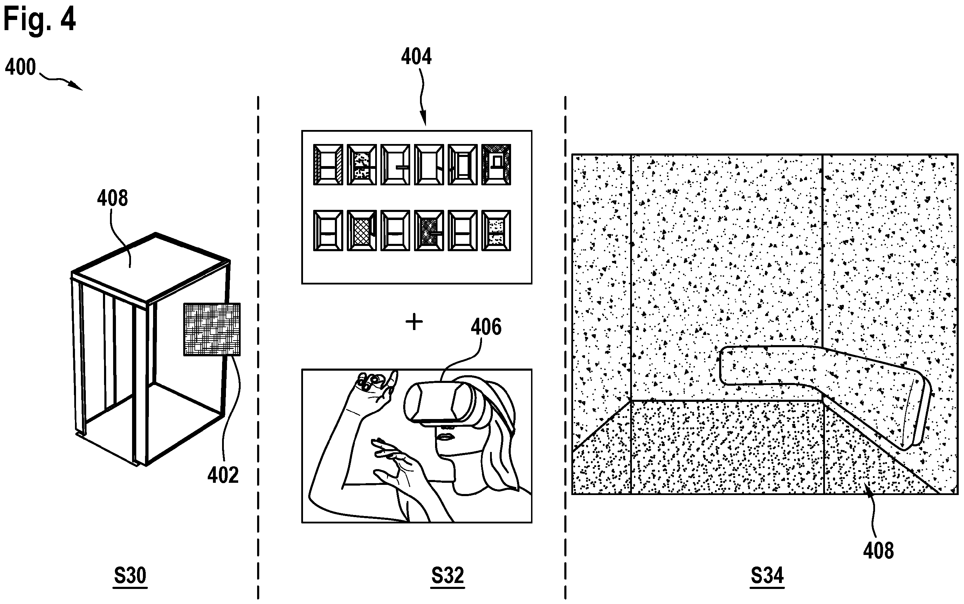

Fig. 4 zeigt ein weiteres erfindungsgemäßes Ausführungsbeispiel eines Ablaufs 400, bei dem als Arbeitsmittel ein Set von Musterstücken, von dem nur ein Material 402 angedeutet ist, ein Konfigurator 404, ein VR-Headset bzw. eine VR-Brille 406, sowie ein Modell bzw. eine Attrappe oder Nachbildung 408 einer Aufzugkabine vorgesehen sind.

Das Modell 408 ist bspw. mit Komponenten wie einer Seiten- oder Rückwand, einer Innentür, Boden und/oder Decke ausgestattet. Der visuelle Eindruck der Komponenten spielt keine besondere Rolle, z.B. können alle Komponenten in einem beliebigen Farbton gehalten sein. Jedoch können fühlbare Eigenschaften der Komponenten denen real verfügbarer Ausstattungen nachempfunden sein, wobei fühlbare Eigenschaften bspw. eine Haptik von Wand, Handlauf, Tür, Eigenschaften des Bodens beim Begehen, etc. umfassen können. Beispielsweise kann eine Komponente wie eine Wand durch eine aktuell verfügbare Wandverkleidung in einer bestimmten Farbe realisiert sein, und andere verfügbare Farben werden dann durch ein digitales Erleben wahrnehmbar wie nachfolgend beschrieben.

Zu einem Arbeitsmittel können auch zwei oder mehr derartiger Kabinenmodelle gehören, die nebeneinander zur Benutzung aufgestellt sind, bspw. auf einem Messestand, in einem Transportfahrzeug, etc., wobei die Modelle sich dann in den haptischen Eigenschaften ihrer Komponenten (oder Kombinationen daraus) unterscheiden. Zusätzlich oder alternativ können auch Komponenten eines Modells austauschbar ausgelegt sein.

In einem Schritt S30 kann ein Kunde eine erste Vorauswahl eines Musterstücks 402 treffen, wobei das Material den Wünschen des Kunden entsprechen kann, und zwar sowohl was eine visuelle als auch eine haptische Gestaltung angeht. Ein phygitales Erleben kann hier bereits durch das Zusammenwirken, per QR-Code, zwischen dem Musterstück 402 und Konfigurator 404 unterstützt werden, wie anhand der vorhergehenden Figuren beschrieben.

In einem Schritt S32 setzt sich der Kunde zusätzlich die VR-Brille 406 auf. Dies kann bspw. erfolgen, nachdem eine bestimmte gewünschte Konfiguration hinreichend bestimmt ist, bspw. durch Vorauswahl eines oder mehrere Musterstücke und/oder durch Auswahl einer vordefinierten Konfiguration am Konfigurator, bspw. einer Grundausstattung, deren haptische Eigenschaften denen des Modells 408 entsprechen. Durch das Aufsetzen der Brille 406, oder durch eine anderweitige Aktivierung, wird der Konfigurator 404 veranlasst, ggf. zusätzlich zu einer zweidimensionalen Ausgabe auf einen Bildschirm, eine 3D(dreidimensionale)-Darstellung der aktuell ausgewählten Konfiguration zu generieren und an die VR-Brille 406 auszugeben. Der Kunde kann sich dabei bereits in der Modellkabine 408 befinden oder so positioniert, dass er diese unmittelbar betreten kann.

In einem Schritt S34 befindet sich der Kunde physisch in dem Kabinenmodell 408 und trägt dabei die Brille 406. Der Kunde hat jetzt eine dreidimensionale Ansicht der gewählten Konfiguration vor Augen, und kann gleichzeitig bspw. mit den Fingern an einen haptischen Eindruck bspw. der ausgewählten Wandverkleidung, eines Handlaufs, etc. spüren. Ein weiterer Auswahlprozess kann auf verschiedene Weise erfolgen, bspw. im Gespräch mit dem Berater, der am Konfigurator gewünschte Alternativen auswählt. Der Konfigurator kann aber auch zusätzlich zur 3D-Darstellung der Kabine Auswahlmenüs, Optionen, usw. einblenden, die der Kunde durch Sprachbefehle und/oder geeignete Bewegungen der Arme und Hände bedienen kann.

Eine 3D-Darstellung einer ausgewählten Konfiguration kann aber auch weiterhin durch das Einscannen eines Codes bzw. Einlesen der entsprechenden Daten ausgelöst werden. Bspw. kann der Kunde auch mit aufgesetzter VR-Brille 406 weiterhin Musterstücke betrachten, in die Hand nehmen und befühlen, usw., und der Kunde oder der Berater kann den Code eines ausgewählten Musterstücks scannen.

Die beschriebenen technischen Arbeitsmittel, die gemäß dem Ablauf 400 zusammenwirken, ermöglichen dem Kunden eine immersive virtuelle und reale Erfahrung, und in dieser Form kann das phygitale Erleben bei einem komplexen Auswahlprozess noch besser unterstützt werden.

Es ist aber klar, dass eine VR-Brille auch dann, wenn kein Kabinenmodell 408 vorhanden ist, den Eindruck verbessern kann, den ein Kunde von gewählten Ausstattungen einer Aufzugkabine gewinnt.

Die VR-Brille 406 kann zu einem Arbeitsmittel wie dem Arbeitsmittel 250 in Fig. 2B gehören, d.h. eine Tasche oder ein Koffer wie die Tasche 256 kann zusätzlich über ein Fach, eine Seitentasche, o.ä. zur Aufnahme einer VR-Brille haben.

Ausführungsbeispiele der Erfindung stellen technische Mittel bereit, die eine klassische Beratung zu Aufzugkabinenausstattungen auf der Basis von Mustern oder Musterstücken ergänzen, und insbesondere ein verbessertes phygitales Erleben ermöglichen. Ein Konfigurator kann visuelle Ansichten komplett ausgestatteter Kabinen bereitstellen, und kann eine komfortable Navigation durch die üblicherweise große Vielfalt der Ausstattungsvarianten gestatten.

Für ein vorteilhaftes phygitales Erleben ist es wichtig, dass die Verbindung zwischen den Musterstücken und der Vielfalt an Konfigurationsmöglichkeiten der Kabine, die der Konfigurator bereitstellt, in praxistauglicher Weise realisiert wird. Dies gelingt bei Ausführungsformen der Erfindung dadurch, dass jedem Musterstück ein eindeutiger Code zugewiesen ist. Besonders vorteilhaft in der praktischen Handhabung kann bspw. ein scannbarer Code sein, wie etwa ein Barcode oder ein QR-Code, der fest am Musterstück angebracht ist. Einscannen des Codes kann dann automatisch dazu führen, dass eine relevante Konfiguration ausgewählt und durch den Konfigurator dargestellt wird. Bspw. kann eine vordefinierte Grundausstattung aufgerufen werden, die das Material des Musterstücks umfasst, oder eine bereits angezeigte Konfiguration wird mit dem Material entsprechend modifiziert.

Nachdem ein Set üblicherweise viele Musterstücke umfasst, ist es vorteilhaft, wenn die Codes keine aktiven Signale senden, sondern eingescannt werden müssen; dies vermeidet, dass der Scanner oder Empfänger ggf. durch eine Vielzahl von Signalen verwirrt wird, und das Einscannen kann besonders zuverlässig erfolgen.

Das Einscannen eines Codes bspw. mit einem handelsüblichen Smartphone erfordert nur wenige Handgriffe und kann während eines Beratungsablaufs vielfach erfolgen. Hierdurch wird das phygitale Erleben verschiedener Konfigurationen, der Wechsel zwischen Alternativen, etc. erheblich vereinfacht. Das Bedienpersonal wird entlastet und kann sich auf die weitere Beratung konzentrieren. Der Berater bzw. die Beraterin muss nicht sämtliche aktuell verfügbaren Optionen, Designs, etc. auswendig kennen. Änderungen, Fehlerkorrekturen, neue Designs oder Stile, etc. können in der Datenbank automatisch hinterlegt werden, und werden dann durch den Konfigurator automatisch berücksichtigt, wenn ein entsprechender Code eingescannt wird.

Besonders eindrucksvoll ist es, wenn ein einfaches Einscannen eines Codes zu einer 3D-Präsentation der gewählten Konfiguration führt, die eine immersive Erfahrung bspw. auf einer VR-Brille ermöglicht. Um eine optimale Balance zwischen dem Umfang der benötigten Arbeitsmittel und der erzielten phygitalen Erfahrung zu erreichen, kann unter Berücksichtigung der Fähigkeiten des Konfigurators und evtl. dem Vorliegen einer VR-Brille evtl. die Zahl der Musterstücke und/oder deren Abmessungen verringert werden.

Dies erleichtert den mobilen Einsatz der Arbeitsmittel etwa auf Messen, bei Kundenbesuchen, etc.

Schließlich ist zu beachten, dass der Begriff "umfassend" andere Elemente oder Schritte nicht ausschließt und das "ein" oder "eine" eine Mehrzahl nicht ausschließt. Auch können Elemente, die in Verbindung mit verschiedenen Ausführungsformen beschrieben werden, kombiniert werden. Es sollte auch beachtet werden, dass Bezugszeichen in den Ansprüchen nicht als Einschränkung des Umfangs der Ansprüche zu verstehen sind.

## Patentansprüche

1. Musterstück (100), welches zumindest einen Teilbereich einer Personentransportanlage, welche in einer aus einer Vielzahl möglicher Konfigurationen ausgewählten Konfiguration konfiguriert ist, in visueller und/oder haptischer Weise erfahrbar wiedergibt, wobei das Musterstück (100) einen maschinenlesbaren Code (110) umfasst, welcher bei einer maschinellen Verarbeitung des Codes (110) zur Bereitstellung von Daten führt, welche die gewählte Konfiguration repräsentieren.

2. Musterstück nach Anspruch 1,
wobei der Code (110) abtastbar vorliegt.

3. Musterstück nach Anspruch 1 oder 2,
wobei der Code (110) in Form eines Etiketts oder einer Markierung vorliegt.

4. Musterstück nach einem der vorhergehenden Ansprüche,
wobei der Code (110) an dem Musterstück (100) befestigt ist.

5. Musterstück nach einem der vorhergehenden Ansprüche,
wobei die gewählte Konfiguration jeweils eine gewählte Zurichtung für zumindest Wand und Decke der Personentransportanlage betrifft.

6. Arbeitsmittel (200) umfassend das Musterstück (202) nach einem der vorhergehenden Ansprüche und einen Konfigurator (204),
wobei der Konfigurator (204) ausgebildet ist,
den Code (206) einzulesen, und
eine maschinelle Verarbeitung durchzuführen, um entsprechend dem eingelesenen Code (206) die gewählte Konfiguration der Personentransportanlage darzustellen.

7. Arbeitsmittel nach Anspruch 6,
wobei die maschinelle Verarbeitung des Codes (206) die gewählte Konfiguration der Personentransportanlage aufruft, eine aktuell dargestellte Konfiguration einschränkt, oder eine aktuell dargestellte Konfiguration ändert.

8. Arbeitsmittel nach Anspruch 6 oder 7,
wobei der Konfigurator (404) zu einer dreidimensionalen Darstellung der gewählten Konfiguration der Personentransportanlage ausgebildet ist.

9. Arbeitsmittel nach einem der Ansprüche 6 bis 8,
weiterhin umfassend:
ein mobiles Datenverarbeitungsgerät (208), auf dem der Konfigurator (204) in Form einer App installiert ist.

10. Arbeitsmittel nach einem der Ansprüche 6 bis 9,
weiterhin umfassend eine VR-Brille (406) zur visuellen Darstellung von durch den Konfigurator (204) bereitgestellten Dateninhalten.

11. Arbeitsmittel nach einem der Ansprüche 6 bis 10,
wobei das Arbeitsmittel ein Set von Musterstücken (252) umfasst, die unterschiedliche Muster wiedergeben, wobei jedem Musterstück ein eindeutiger Code zugewiesen ist,

12. Arbeitsmittel nach einem der Ansprüche 6 bis 11,
wobei das Arbeitsmittel einen Koffer oder eine Tasche (256) umfasst, in dem das Set von Musterstücken (252) sowie das Datenverarbeitungsgerät (208) und optional die VR-Brille untergebracht ist.

13. Verfahren zum Gestalten einer Personentransportanlage, insbesondere einer Aufzugskabine der Personentransportanlage, bei dem
ein maschinenlesbarer Code (110) eines Musterstücks (100) gemäß einem der Ansprüche 1 bis 5 eingelesen wird, und
eine dem eingelesenen Code (119) entsprechenden Konfiguration der Personentransportanlage durch ein Datenverarbeitungsgerät dargestellt oder visualisiert werden.

14. Verfahren nach Anspruch 13, bei dem
das Datenverarbeitungsgerät als ein mobiles Datenverarbeitungsgerät (208) nach Anspruch 9 vorgesehen wird.

15. Verfahren nach Anspruch 13, bei dem
das Datenverarbeitungsgerät als eine VR-Brille (406) nach Anspruch 10 vorgesehen wird.
